# EUROPÄISCHE PATENTANMELDUNG

(11) **EP 1 056 312 A2**
(43) Veröffentlichungstag der Anmeldung: **29.11.2000**
(21) Anmeldenummer: 00117787.2
(22) Anmeldetag: 16.03.1999
(51) Int. Cl.: H05B 6/40

(54) **Heizeinrichtung und Verfahren für eine Wärmebehandlung**

(30) Priorität: 16.03.1998 DE 29804574 U
(62) Teilanmeldung aus: 99911797.1
(71) Anmelder: KUKA Schweissanlagen GmbH, 86165 Augsburg (DE)
(72) Erfinder: Benda, Pablo, 86156 Augsburg (DE); Gröger, Walter, 86494 Emersacker (DE); Mazac, Karel, Dr., 86316 Friedberg (DE); Thrul, Werner, 86450 Zusamzell (DE)
(74) Vertreter: Ernicke, Hans-Dieter, Dipl.-Ing.

(57) **Zusammenfassung**

Die Erfindung betrifft ein Verfahren und eine Heizeinrichtung (1) zur Wärmebehandlung von Werkstücken (2), insbesondere zum Gelieren oder zum Erwärmen von Bördelbereichen (18) an Fahrzeugkarosserieteilen. Die Heizeinrichtung (1) besitzt ein oder mehrere Heizkörper (24), mit denen das Werkstück (2) konduktiv erwärmt wird. Die Heizkörper (24) sind der Werkstückkontur nachgeformt und lassen sich zur örtlichen Veränderung des Wärmeeintrags am Werkstück (2) einzeln positionieren. Die Heizkörper (24) werden ihrerseits induktiv erwärmt.

## Beschreibung

Die Erfindung betrifft ein Verfahren und eine Heizeinrichtung für eine Wärmebehandlung mit den Merkmalen im Oberbegriff des Verfahrens- und Sachhauptanspruchs.

Induktive Heizeinrichtungen sind aus der DE C1 37 11 645 und der DE-A-195 27 827 bekannt. Sie bestehen aus einer elektrischen Stromversorgung nebst Transformator und Induktor. Der Induktor ist als einteilige Spule ausgebildet, der z.B. in Form einer Ringspule mehrfach um ein innenliegendes Werkstück gewickelt ist. Durch die mittel-oder hochfrequenten Heizwechselströme wird dieses Werkstück erwärmt. Die bekannten Heizeinrichtungen und deren Induktoren sind für kleinere Werkstücke besonders geeignet, die sich in der Spule plazieren lassen. Für größere Werkstücke, wie z.B. Türen von Kraftfahrzeugen oder dergleichen treten mit den bekannten Induktoren Probleme mit gleichmäßiger Wärmeverteilung, Bauteilverzug etc. auf.

Es ist daher Aufgabe der vorliegenden Erfindung, ein Verfahren und eine Heizeinrichtung für eine Wärmebehandlung aufzuzeigen, die andere größere Einsatzbereiche ermöglichen.

Die Erfindung löst diese Aufgabe mit den Merkmalen im Hauptanspruch.
Die erfindungsgemäße Heizeinrichtung kann für unterschiedliche Wärmebehandlungsprozesse eingesetzt werden. Bevorzugt ist ein Einsatz als Gelierstation oder als Glühstation für Blechbauteile von Fahrzeugkarosserien. Bei beiden Verfahren ist der Wärmeeintrag begrenzt und liegt wesentlich unter der z.B. für Schweißprozesse erforderlichen Wärmemenge.

Der besondere Vorteil der konduktiven und gegebenenfalls zusätzlich induktiven Wärmebehandlung liegt in der örtlich begrenzten und in der gezielten Erwärmung der Werkstücke. Insbesondere soll beim Gelieren und beim Glühen nur der Umformbereich erwärmt werden. Durch die örtliche Begrenzung des Wärmeeintrages können unerwünschte Nebenwirkungen der Wärmebehandlung, wie ein Bauteilverzug, eine thermische Überbelastung von Klebstoffen, Dichtmitteln, etc. vermieden werden.

Bei der erfindungsgemäßen Heizeinrichtung können ein oder mehrere Temperaturfühler vorhanden sein, die für den Wärmebehandlungsprozeß von Vorteil sind. Diese Wärmefühler können insbesondere zur Steuerung und Regelung des Wärmebehandlungsprozesses eingesetzt werden.

Die erfindungsgemäße Heizeinrichtung hat verschiedene weitere Vorteile. Zum einen ermöglicht sie ein schnelles Aufheizen von Blechteilen zum gleichmäßigen Polymerisieren von Klebe- oder Dichtmitteln in Bördelnähten oder Sealernähten. Dabei ergibt sich ein geringer Energieverbrauch. Mittels Temperaturregelung kann die Haltetemperatur für die Polymerisation konstant gehalten werden. Hierbei ist eine optimale Anpassung an die Gelieraufgaben möglich. Dabei lassen sich Prozeßparameter und Prozeßprogramme über ein Display an der Steuerung individuell einstellen. Bei unterschiedlichen Lastkreisen ist keine Anpassung erforderlich. Insgesamt ergeben sich optimale Prozeßbedingungen bei niedrigen Investitionskosten.

Bei der Glühstation ermöglicht die erfindungsgemäße Heizeinrichtung ein gesteuertes Erwärmen und geregeltes Halten der Temperatur. Auch hier ist eine optimale Anpassung an die Glühaufgabe zu erreichen. Durch das induktive Glühverfahren lassen sich gezielte Gefügeumwandlungen an geschweißten Bauteilen erzielen. Insbesondere können Gußwerkstoffe innerhalb kürzester Zeit im Gefüge umgewandelt werden.

In den Unteransprüchen sind weitere vorteilhafte Ausgestaltungen der Erfindung angegeben.

Die Erfindung ist in den Zeichnungen beispielsweise und schematisch dargestellt. Sie zeigen im einzelnen:
- Figur 1:: eine induktive Heizeinrichtung in Form einer Gelieranlage mit einem mehrteiligen Induktor und einem Werkstück in einer Draufsicht,
- Figur 2:: eine detaillierte und abgebrochene Seitenansicht des Induktors am Werkstück,
- Figur 3:: eine Variante des Induktors mit zwei Schleifen,
- Figur 4:: eine Heizeinrichtung in Form einer Glühstation für Bördeleinrichtungen in einer perspektivischen Darstellung,
- Figur 5:: ein Werkstück mit Umformbereichen in Seitenansicht und Draufsicht,
- Figur 6:: einen Querschnitt durch die Heizeinrichtung von Figur 4 mit einer Bauteilaufnahme und einem Werkstück,
- Figur 7:: eine Variante der Heizeinrichtung mit ein oder mehreren Heizkörpern,
- Figur 8:: eine weitere Variante einer direkten Bauteilbeheizung durch parallele und zustellbare Induktoren und
- Figur 9:: eine Bauvariante zu Figur 1 mit kurzen und weit beabstandeten Induktorteilen.

Bei den in den Zeichnungen gezeigten Werkstücken (2) handelt es sich um Blechbauteile von Fahrzeugkarosserien, z.B. um die Fahrzeugtür einer Rohkarosse. Alternativ können es aber auch beliebige andere Werkstücke sein. Die Werkstücke (2) können ein- oder mehrteilig sein und eine beliebige Kontur besitzen. In der gezeigten Ausführung hat z.B. die Türe (2) eine Fensteröffnung (15). Darüber hinaus können auch weitere Öffnungen (15) vorhanden sein. Das Werkstück (2) bzw. dessen Einzelteile bestehen aus metallischen Werkstoffen, insbesondere Eisen- oder Stahlwerkstoffen oder Aluminiumlegierungen oder anderen Leichtmetallegierungen. Dabei können die Einzelteile auch aus unterschiedlichen metallischen Werkstoffen oder Verbundwerkstoffen bestehen.

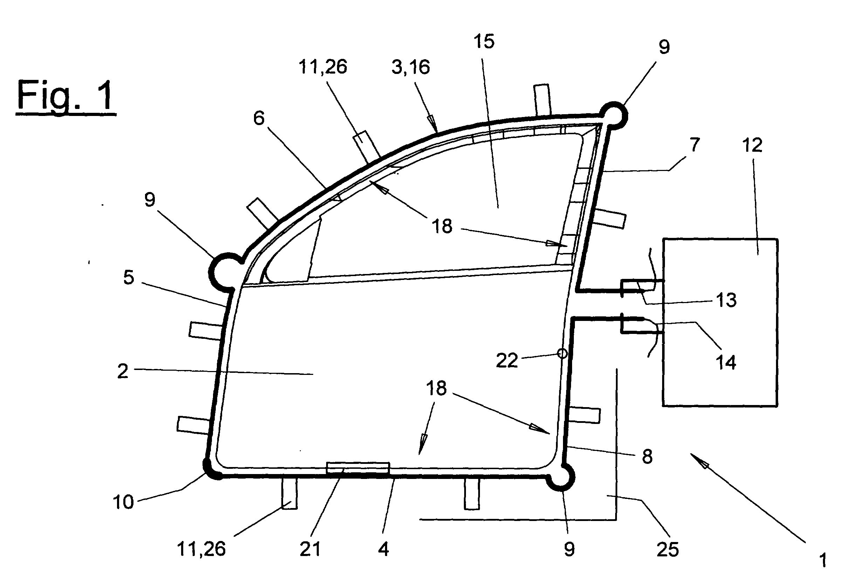

Das Werkstück (2) ruht in oder auf einer Bauteilaufnahme (22), die auf einer vorzugsweise nicht ferromagnetischen Grundplatte oder einem Gestell (26) angeordnet ist. Diese Teile (22,26) sind in Figur 1 schematisch angedeutet. Die Bauteilaufnahme (22) hat geeignete Führungen und Halterungen sowie gegebenenfalls Spannelemente (nicht dargestellt) zur Fixierung des Werkstücks (2) in der gewünschten Position.

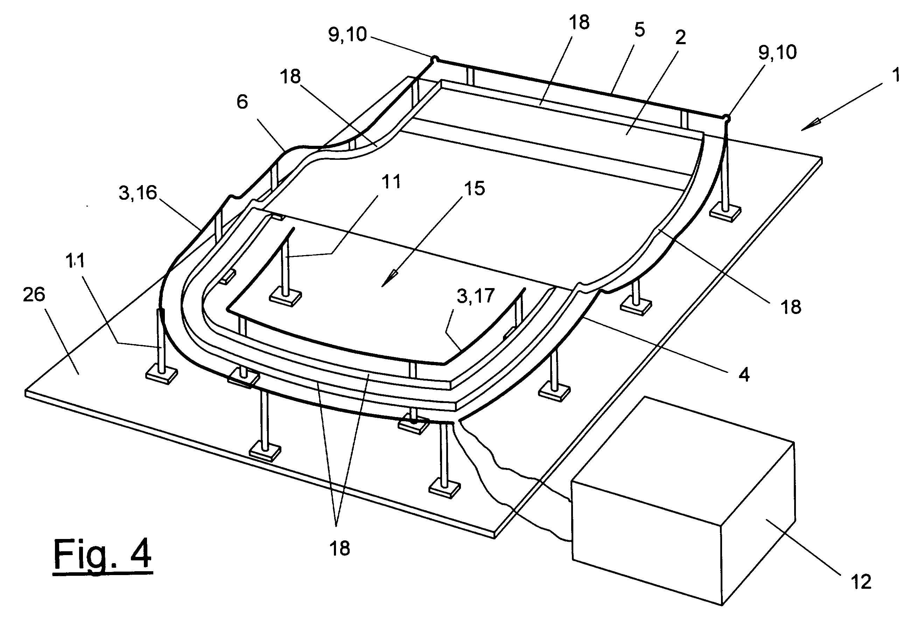

Das Werkstück (2) hat ein oder mehrere vorzugsweise randseitig angeordnete Umformbereiche (18). Diese können je nach Fertigungsstadium unterschiedlich ausgebildet sein.
Bei der in Figur 1 bis 3 gezeigten Fahrzeugtüre (2) sind beispielsweise einige der außenliegenden Blechkanten schon fertig gebördelt. Hier sind die Umformbereiche (18) als Bördelfalze ausgebildet.
Im Ausführungsbeispiel von Figur 4 bis 8 ist die Fahrzeugtüre (2) in einem Vorstadium vor dem Bördeln dargestellt. Die Blechteile der Fahrzeugtüre (2) kommen hier aus einem ersten Umformprozeß, z.B. einem Preß-, Biege- oder Tiefziehprozeß und haben vorgebogene Bördelflansche, die in einem nachfolgenden Bördelprozeß vor- und fertiggefalzt werden sollen.

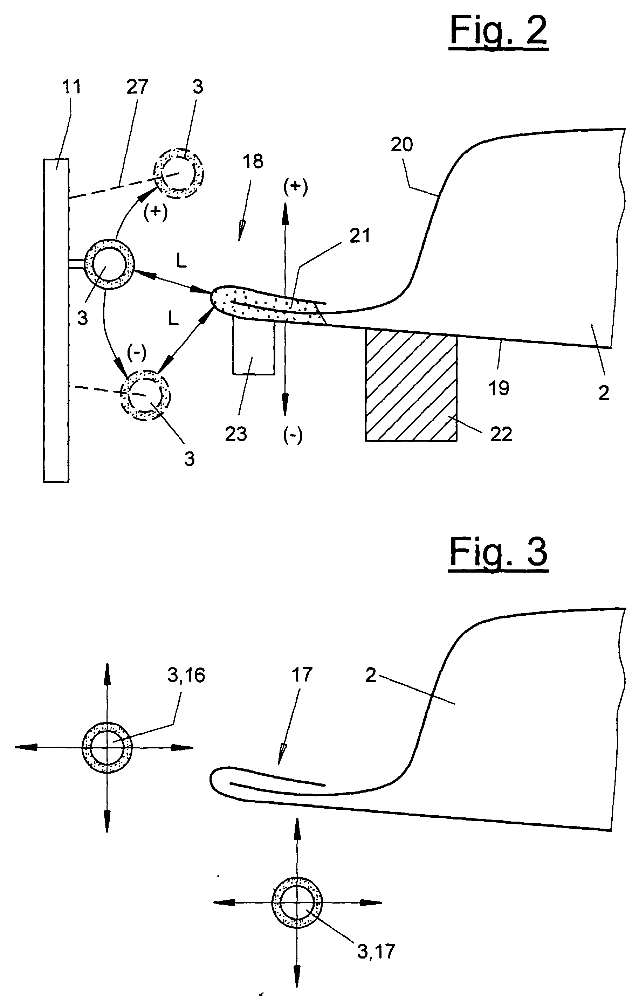

Wie Figur 2 und 3 verdeutlichen, wird an den Bördelfalzen (18) zwischen dem Außenblech oder Unterblech (19) und dem eingeschobenen Blech oder Innenblech (20) ein Klebstoff (21) eingebracht. Der umgebogene Bördelfalz (18) kann andererseits gegenüber dem eingeschobenen Blech (20) auch noch mit einem Sealer (nicht dargestellt) abgedeckt werden. Dies kann z.B. eine längs der Kante aufgetragene Dichtungsmittelraupe sein. Der Klebstoff (21) und der Sealer benötigen eine möglichst gesteuerte und gegebenenfalls auch geregelte Wärmezufuhr, um auszuhärten und abzubinden bzw. zu polymerisieren. Diese Erwärmung sollte möglichst gleichmäßig erfolgen, wobei gewisse Problemzonen mit erhöhter Massenansammlung bzw. Wärmeableitung an der Fahrzeugtüre (2) bestehen. Dies sind z.B. die Bereiche an den Türgelenken und auch andere Stellen.

Zur Erwärmung der Fahrzeugtüre (2) und insbesondere zur Aufheizung der partiell angeordneten oder umlaufenden Umformbereiche (18) ist eine induktive Heizeinrichtung (1) vorhanden, die für den in Figur 1 bis 3 gezeigten Einsatzbereich als Gelieranlage ausgebildet ist. In Figur 4 bis 8 ist die Heizeinrichtung (1) als Glühstation zum Rekristallisations- oder Löseglühen oder für andere Glühprozesse zur Gefügebeeinflussung der Werkstoffe ausgebildet.

Die Heizeinrichtung (1) ist in einer Fertigungslinie angeordnet und befindet sich z.B. hinter einer ersten Umformstation, die ein Preß- oder Biegewerkzeug hat. Hierbei werden das Werkstück (2) oder dessen Einzelteile einem ersten mechanischen Umformprozeß beliebiger Art unterworfen. Dies kann z.B. ein Preß-, Tiefzieh- oder Biegeprozeß sein. Insbesondere können dabei auch mehrere Einzelteile getrennt bearbeitet und anschließend zu der gezeigten Fahrzeugtüre (2) zusammengesetzt werden. Statt einem Umformprozeß können auch mehrere Umformprozesse vorhergehen.

Hinter der Heizeinrichtung (1) werden in ein oder mehreren Folgestationen der Fertigungslinie ein oder mehrere weitere Behandlungsschritte, z.B. weitere Umformprozesse durchgeführt. Hierbei kann insbesondere der Heizeinrichtung (1) im Ausführungsbeispiel von Figur 4 bis 8 mindestens eine Bördeleinrichtung nachgeschaltet sein. Der Übersicht halber sind in den Zeichnungen die Fertigungslinie und die der Heizeinrichtung (1) vor- und nachgeschalteten Stationen nicht dargestellt. In einer Abwandlung kann die Heizeinrichtung (1) auch in eine Umformstation integriert sein.

Die Heizeinrichtung (1) besteht aus mindestens einer Stromversorgung nebst Steuerung (12), die gegebenenfalls auch eine Kühlmittelversorgung beinhaltet und aus einem oder mehreren Induktoren (3). Der Induktor (3) kann ein oder mehrere Induktorschleifen (16,17) haben, die an einer gemeinsamen Stromversorgung (12) angeschlossen sind. Alternativ können die Induktoren (3) oder Induktorschleifen (16,17) auch getrennte Stromversorgungen (12) haben.

Der Induktor (3) ist mehrteilig ausgebildet und besteht aus mehreren, vorzugsweise in Reihe hintereinander angeordneten Induktorteilen (4,5,6,7,8), die durch Verbindungselemente (9,10) miteinander gekoppelt sind. Alternativ oder zusätzlich kann zumindest stellenweise auch eine Parallelanordnung wie in Figur 3, 7 und 8 vorhanden sein. Die Induktorteile (4,5,6,7,8) bilden mindestens eine der zu erwärmenden Werkstückkontur nachgebildete Induktorschleife (16,17) und sind über einen Elektroanschluß (13) mit der Stromversorgung (12) verbunden. An den Schleifenenden des Induktors (3) kann außerdem ein Fluidanschluß (14) vorhanden sein, mit dem z.B. ein Kühlmittel durch den Induktor (3) bzw. dessen Induktorteile (4,5,6,7,8) geleitet wird. Die nachfolgenden Erläuterungen zu den Induktoren (3) gelten sinngemäß auch für deren Induktorteile (4,5,6,7,8).

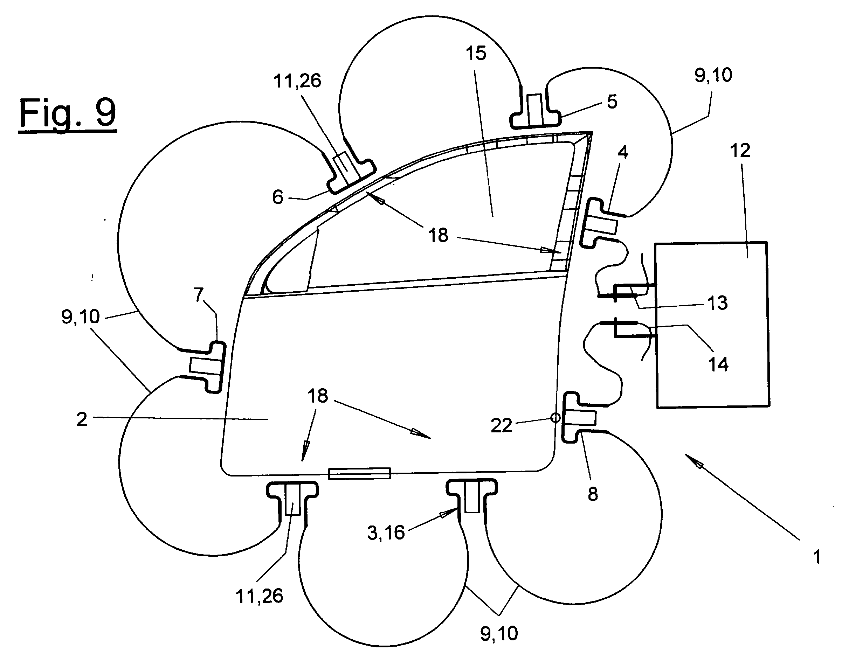

In Figur 1 bis 8 umschließt der Induktor (3) die Fahrzeugtüre außenseitig fast vollständig. Die Induktorteile (4,5,6,7,8) haben eine relativ große Länge und sind mit ihren Enden in enger Nachbarschaft zueinander angeordnet. Entsprechend kurz sind die Verbindungselemente (9,10). Figur 9 zeigt hierzu eine Abwandlung mit mehreren kurzen Induktorteilen (4,5,6,7,8), die mit größeren gegenseitigen Abständen rund um die Fahrzeugtüre (2) verteilt angeordnet sind. Die Verbindungselemente (9,10) sind entsprechend länger. Diese Induktorteile (4,5,6,7,8) wirken nur örtlich begrenzt auf das Werkstück (2) ein, wobei die Verbindungselemente (9,10) in großen Bögen weiter vom Werkstück (2) distanziert sind und im wesentlichen keinen induktiven Einfluß auf das Werkstück (2) haben.

Der Induktor (3) bzw. dessen Teile (4,5,6,7,8) sind vorzugsweise als stromleitende Rohre, z.B. als Kupferrohre, ausgebildet. Die Rohre haben vorzugsweise eine gewisse plastische Verformbarkeit und lassen sich durch Biegen der gewünschten Werkstückkontur nachformen. Figur 1 zeigt diese Gestaltung z.B. im oberen Fensterbereich. Der Induktor (3) folgt der Außenkontur der Türe (2) und ist in der Nähe von den zu beheizenden Umformbereichen (18) angeordnet.

Die Induktorteile (4,5,6,7,8) lassen sich einzeln gegenüber dem Werkstück (2) positionieren. Sie können in ihrer Lage und in ihrem Abstand zum Werkstück (2) auf Wunsch verändert werden. Zu diesem Zweck besitzt vorzugsweise jedes Induktorteil (4,5,6,7,8) eine eigene, vorzugsweise verstellbare Haltevorrichtung (11), die in beliebig geeigneter Weise ausgebildet ist und das Induktorteil (4,5,6,7,8) in der gewünschten Lage gegenüber dem Werkstück (2) positioniert und festhält. Die Haltevorrichtungen (11) haben z.B. einen auf der Grundplatte (26) befestigten Ständer mit einer ein- oder mehrgliedrigen Verstelleinrichtungen (27) und Spannmitteln, die das Induktorteil (4,5,6,7,8) halten und positionieren.

Vorzugsweise besteht eine Verstellmöglichkeit in zwei oder mehr Achsen, z.B. in zwei translatorischen und/oder rotatorischen Achsen. Außerdem kann eine Längenverstellung vorhanden sein. Die Induktorteile (4,5,6,7,8) können dadurch sowohl in ihrem seitlichen Abstand, wie auch in ihrer Höhe gegenüber dem Werkstück (2) positioniert werden. Figur 2 zeigt hierfür ein Ausführungsbeispiel.

Durch die Verstellmöglichkeit kann der Wärmeeinfluß am Werkstück (2) verändert werden. Über eine Abstandsänderung kann der Wärmeeintrag verstärkt oder geschwächt werden. Hierbei ist es beispielsweise möglich, ein Induktorteil (4,5,6,7,8) mittels der Haltevorrichtung (11) so zu positionieren oder auch zu verformen, dass örtlich sein Abstand zum Werkstück (2) besonders gering wird. An dieser Stelle ist der Wärmeeintrag besonders groß. Eine solche Gestaltung ist z.B. im Bereich der Türangeln sinnvoll, wo über die Massenanhäufung am Werkstück (2) eine hohe Wärmeableitung gegeben ist. Eine Parallelanordnung von Induktorteilen (4,5,6,7,8) oder die Anordnung von zwei oder mehr Induktorschleifen (16,17) gemäß Figur 3 kann ebenfalls der Veränderung des Wärmeeintrags dienen. Die Induktorschleifen (16,17) sind unabhängig voneinander positionierbar. Sie verlaufen vorzugsweise zumindest teilweise parallel zueinander.

Alternativ können die Induktorteile (4,5,6,7,8) auch in beliebig anderer Weise ausgebildet sein, z.B. in Form von speziellen konturenangepaßten und z.B. gefrästen Profilen. Sie müssen auch nicht hohl sein.

Der Induktor (3) besteht aus zwei oder mehr Induktorteilen, vorzugsweise mindestens vier Induktorteilen (4,5,6,7,8). Die Induktorteile (4,5,6,7,8) sind vorzugsweise elektrisch in Reihe geschaltet. Sie können zumindest teilweise auch parallel geschaltet sein. Dabei können gegebenenfalls auch mehrere ein- oder mehrteilige Induktoren (3) an dem Werkstück (2) angeordnet sein und mit einer gemeinsamen Stromversorgung (12) oder jeweils mit einer eigenen Stromversorgung verbunden sein. Beispielsweise kann ein eigener ein- oder mehrteiliger Induktor (3) in der Fensteröffnung (15) angeordnet sein, um die innenliegenden Bördelkanten zu erwärmen.

Die Verbindungselemente (9,10) zwischen den Induktorteilen (4,5,6,7,8) können in beliebig geeigneter Weise ausgebildet sein. Hierbei empfiehlt es sich, z.B. zunächst flexible Verbindungselemente (9) zu verwenden, die z.B. als elektrisch leitende Schläuche ausgebildet sind. Diese Verbindungselemente (9) können dann Verstellungen der Induktorteile (4,5,6,7,8) und der Haltevorrichtungen (11) folgen und so eine komplette Konturenanpassung des Induktors (3) ermöglichen. Sobald die gewünschte Position der Induktorteile (4,5,6,7,8) gefunden ist, können die flexiblen Verbindungselemente (9) gegen starre Verbindungselemente (10), z.B. starre rohrförmige Eckverbinder, ausgetauscht werden. Es ist aber auch möglich, die flexiblen Verbindungselemente (9) zu belassen oder in Kombination mit starren Verbindungselementen (10) einzusetzen.

Die Heizeinrichtung (1) kann auch ein oder mehrere Sensoren, z.B. Temperaturfühler (23) aufweisen, mit denen die Heizeinrichtung (1) gesteuert wird. Für den Einrichtvorgang können derartige Sensoren bereits eingesetzt werden. Es ist aber auch möglich, für den Einrichtvorgang eine sogenannte Wärmemeß- oder Thermokamera einzusetzen, um in Verbindung mit der Induktoranpassung den optimalen Wärmeeintrag zu finden.

Wie Figur 2 verdeutlicht, kann der Temperaturfühler (23) an geeigneter Stelle im Umformbereich (18) am Werkstück (2) angeordnet sein. Diese Temperaturfühler (23) können nicht nur zur Einrichtung der Station, sondern auch während der normalen Wärmeprozesse zur Steuerung und Regelung beziehungsweise Überwachung des Wärmeeintrags eingesetzt werden.

Die Stromversorgung (12) kann in beliebig geeigneter Weise ausgebildet sein. Vorzugsweise ist sie gemäß der DE-A 195 27 827 gestaltet und besitzt primärseitig einen Netzgleichrichter mit einem nachgeschalteten Gleichstromkreis oder Zwischenkreis mit einer Kondensatoranordnung, die die sekundärseitig entstehende Blindleistung primärseitig kompensiert. Dieser Zwischenkreis ist vor einen beliebig steuerbaren Wechselrichter geschaltet, der seinerseits ausgangsseitig an einen geeigneten Transformator angeschlossen ist. Am Transformator ist wiederum sekundärseitig der Induktor (3) angeschlossen. Der sekundärseitige Heizkreis ist vorzugsweise ohne Kondensator ausgestattet und schwingkreisfrei. Die Steuerung der Heizleistung und/oder der Heiztemperatur am Werkstück (2) wird durch Frequenzmodulation und/oder Pulsweitenmodulation am Wechselrichter gesteuert und gegebenenfalls bei einer entsprechenden Temperatur- oder Wärmemessung auch geregelt. Der Wechselrichter erzeugt einen mittel- oder hochfrequenten Wechselstrom von z.B. 4 bis 15 kHz, der nach der Transformierung als Heizstrom dem Induktor (3) zugeführt wird.

Je kleiner die Frequenz des Heizstroms ist, desto schneller steigt bei der gewählten Anordnung wegen steigender Leistung die Temperatur im Werkstück (2). Desgleichen steigt die Temperatur mit der Größe der gewählten Pulsweite. Bei den Wärmebehandlungen, insbesondere beim Gelieren und beim Glühen kann mit unterschiedlichen Heizstrom-Frequenzen gearbeitet werden. Insbesondere kann der Prozeß über ein Stromprogramm gesteuert und über die Temperaturmessung am Werkstück (2) oder einen anderen Feedback auch geregelt werden.

Bei der gezeigten Ausführungsform können mit dem mehrteiligen Induktor (3) auch Werkstückkorrekturen vorgenommen werden. Bei einer Wärmebehandlung besteht meistens das Problem, dass sich das Werkstück (2) beim Abkühlen verzieht. Verzug kann auch beim Aufwärmen entstehen. Diesem unerwünschten Verzug kann durch einen gezielten Wärmeeintrag begegnet werden. Zu diesem Zweck wird z.B. zunächst bei der Einrichtung der mehrteilige Induktor (3) derart an das Werkstück (2) angepaßt, dass in erster Näherung einmal ein gleichmäßiger Wärmeeintrag an den gewünschten Stellen des Werkstückes (2) erfolgt. Sollte sich hinterher zeigen, dass bei dieser Wärmebehandlung beim Aufwärmen bzw. Abkühlen ein Verzug eintritt, können die jeweils für eine Kompensation geeigneten Induktorteile (4,5,6,7,8) verstellt werden, um durch eine damit einhergehende Änderung des Wärmeeintrags gezielt den Verzug zu kompensieren.

Figur 2 verdeutlicht diese Verzugskompensation. Bei der Verstellung des Induktors (3) sollte der Abstand "L" zum Umformbereich (18) möglichst konstant bleiben. Wird der Induktor aus der mit durchgezogenen Strichen gezeichneten Normalposition in "Plus-"Richtung nach oben über den Umformbereich (18) verstellt, hat dies eine stärkere Erhitzung des Innenblechs (20) zur Folge. Der Umformbereich (18) reagiert entsprechend und verformt sich in "Minus-"Richtung nach unten. Umgekehrt hat eine Verstellung des Induktors (3) in "Minus-"Richtung nach unten eine stärkere Erhitzung des Außenblechs (19) zur Folge. Der Umformbereich (18) reagiert entsprechend in "Plus-"Richtung. In den beiden Verstellpositionen ist der Induktor (3) gestrichelt dargestellt.

Figur 9 zeigt eine Heizeinrichtung (1) in Form einer Vorstation für die Gelieranlage von Figur 1. Diese Vorstation eignet sich besonders für die gezielte Beseitigung von Verzügen am Werkstück (2), die durch vorhergehende Behandlungen und Prozesse entstanden sind. Bei der Ausführungsform von Figur 9 sind mehrere kleine und kurze Induktorteile (4,5,6,7,8) an geeigneten Stellen des Werkstücks (2) angeordnet und wirken lokal auf bestimmte Stellen am Werkstück (2) ein. Dementsprechend klein sind die Wärmeeinflußzonen am Werkstück (2), so dass ein sehr gezielter und hochwirksamer Wärmeeintrag erfolgen kann. Die Induktorteile (4,5,6,7,8) können auch hier wie in den vorhergehenden Ausführungsbeispielen parallel oder in Reihe angeordnet sein. Sie sind untereinander auch elektrisch in Reihe geschaltet, wobei zumindest teilweise auch elektrische Parallelschaltungen bestehen können. Die weit ausbauchenden Verbindungselemente (9,10) haben durch ihren großen Abstand keinen oder nur einen sehr geringen induktiven Einfluß auf das Werkstück (2). Bei dieser Ausführung haben die Induktorteile (4,5,6,7,8) eine sehr kleine Länge und sind kürzer als die Verbindungselemente (9,10).

In einer nicht dargestellten Abwandlung sind Mischformen der Ausführungsbeispiele von Figur 1 und 9 möglich. So können Induktorteile mit größerer Länge und kurzen gegenseitigen Abständen mit anderen Induktorteilen kombiniert werden, die eine kleinere Länge und größere gegenseitige Abstände aufweisen. Desgleichen können auch mehrere längere Induktorteile mit größerem Abstand zueinander angeordnet sein. Die Größe und Anordnung der Induktorteile (4,5,6,7,8) richtet sich nach den Gegebenheiten des Werkstücks (2) und den Prozeßerfordernissen bzw. der Lage und Größe der gewünschten Wärmeeinflußzone am Werkstück (2).

Sobald beim Einrichtvorgang die optimale Stellung der Induktorteile (4,5,6,7,8) gefunden ist, werden diese mit ihren Haltevorrichtungen (11) fixiert und gegebenenfalls auch die Verbindungselemente (9,10) entsprechend festgelegt. Für den Dauerbetrieb bleibt dann der Induktor (3) unverändert und nur das Werkstück (2) wird für die jeweilige Wärmebehandlung zugeführt und wieder ausgetauscht.

Im Ausführungsbeispiel von Figur 4 bis 8 wird mit der Heizeinrichtung (1) ein Glühprozeß durchgeführt. Bei Werkstücken aus Aluminium oder anderen Leichtmetallegierungen kann es sich um ein Lösungsglühen handeln. Bei Werkstücken (2) aus Stahl oder anderen Eisenwerkstoffen kann es sich um ein Spannungsfrei- bzw. Rekristallisationsglühen handeln. Alternativ sind auch andere Arten der Wärmebehandlung möglich.

In der Anordnung von Figur 4 bis 6 und 8 wird das Werkstück (2) an den zu erwärmenden Umformbereichen (18), d.h. hier den vorgebogenen Bördelflanschen, direkt über den oder die Induktor(en) (3) beheizt. In Figur 4 ist dazu ein ringförmiger Induktor (3) außen um das Werkstück (2) und um die außenliegenden Bördelflansche (18) gelegt. In der Werkstücköffnung (15) ist ein zweiter Induktor (3) entlang der dortigen Umformbereiche (18) angeordnet. In der Ausführungsform von Figur 4 ist zumindest der äußere Induktor (3) mehrteilig ausgebildet. Er besteht aus drei Induktorteilen (4,5,6), die an geeigneten Stellen, z.B. an den Ecken über elastische Verbindungsteile (9,10) miteinander verbunden sind. Die Induktorteile (4,5,6) lassen sich über die Haltevorrichtungen (11) getrennt voneinander verstellen und an das Werkstück (2) anpassen.

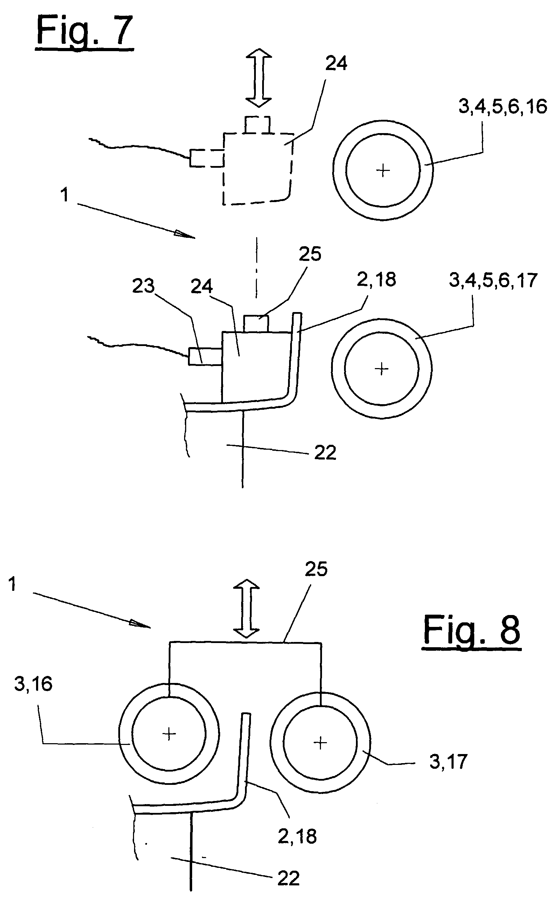

Die Induktoren (3) können über, seitlich neben oder unter den Umformbereichen (18) angeordnet sein. Wie Figur 8 verdeutlicht, können auch zwei Induktoren (3) oder Induktorschleifen (16,17) parallel nebeneinander und zu beiden Seiten des Umformbereiches (18) angeordnet sein. Die Induktoren (3) sind dabei vorzugsweise derart positioniert, dass die Umformbereiche (18) und insbesondere die für eine spätere Falzung vorgesehenen Bördelflansche auf größerer Breite und nicht nur im späteren Biegebereich erwärmt werden.

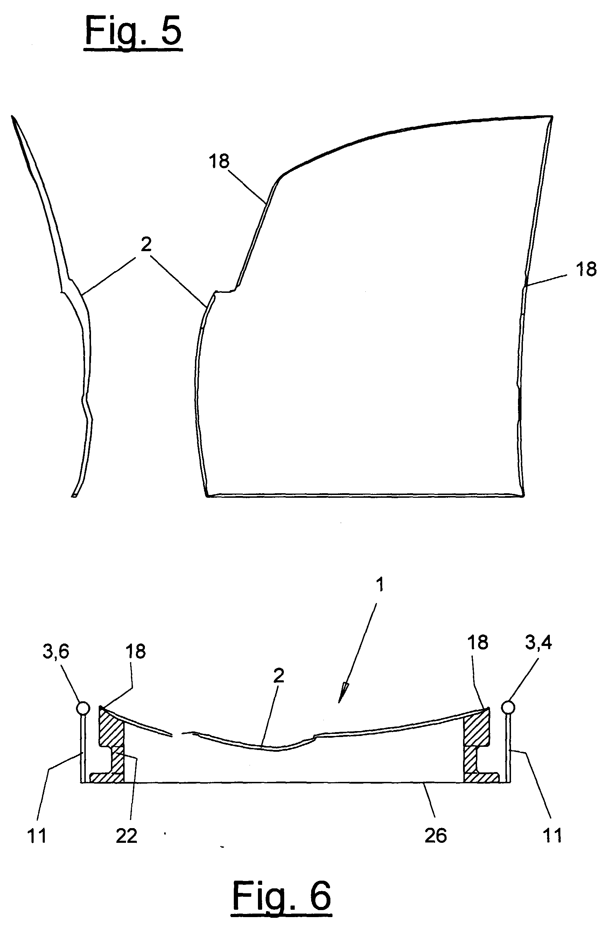

Im Ausführungsbeispiel von Figur 4 und 6 sind die Induktoren (3) starr und relativ ortsfest gegenüber dem Werkstück (2) angeordnet. Figur 8 zeigt hierzu eine Variante, bei der die Induktoren (3) mit einer schematisch angedeuteten Zustellvorrichtung (25) verbunden sind, die die Induktoren (3) auf und ab bewegt. Für die Induktorteile (4,5,6) können hierbei jeweils eigene und gemeinsam oder getrennt steuerbare Zustellvorrichtungen (25) vorhanden sein.

Der Umformbereich (18) ist als abgewinkelter Bördelflansch ausgebildet, der in der abgesenkten Betriebsstellung der Stellvorrichtung (25) mit seinem hochstehenden Rand zwischen die Induktoren (3) greift. Dieser hochstehende Rand des Bördelflansches wird dadurch beidseits erwärmt. Der anschließende und im wesentlichen horizontale Teil des Umformbereiches (18) wird nur von oben und vom linken Induktor (3) erwärmt. In der Ruhestellung ist die Zustellvorrichtung (25) mit den Induktoren (3) angehoben. Das Werkstück (2) liegt dadurch frei auf der Bauteilauflage (22) und kann für einem Bauteilwechsel entnommen und neu zugeführt werden.

Im Ausführungsbeispiel von Figur 4 bis 6 und 8 werden die Umformbereiche (18) von den Induktoren (3) direkt induktiv erwärmt. Figur 7 zeigt hierzu ebenfalls eine Variante. In diesem Fall werden die Umformbereiche (18) durch ein oder mehrere Heizkörper (24) konduktiv durch Berührungskontakt und Wärmeleitung erhitzt. Die Heizkörper (24) sind dabei in ihrer Formgebung an die Umformbereiche (18) angepaßt und erstrecken sich längs der Umformbereiche (18). Sie können sich wie in Figur 7 gezeigt in die abgewinkelten Umformbereiche (18) einschmiegen.

Die Heizkörper (24) können z.B. von ein oder mehreren Stempeln gebildet werden, die miteinander auch einen zumindest teilweise umlaufenden Heizrahmen bilden können. Vorzugsweise sind die Heizkörper (24) ebenfalls mit einer Zustellvorrichtung (25) versehen, mit der sie angehoben und abgesenkt oder in beliebig anderer geeigneter Weise bewegt werden können. Dies gilt auch für die Zustellvorrichtung (25) von Figur 8.

Im Ausführungsbeispiel von Figur 7 werden die vorzugsweise aus einem geeigneten Werkstoff und insbesondere aus Metall bestehenden Heizkörpern (24) induktiv von der elektrischen Induktionsheizung erwärmt. Die Beheizung kann zum einen in der Löse- oder Ruhestellung und damit in Distanz von Werkstück (2) erfolgen. Sobald der oder die Heizkörper (24) die gewünschte Temperatur haben, was z.B. über einen zugeordneten Temperaturgeber (23) festgestellt werden kann, werden sie an die Umformbereiche (18) zugestellt und übertragen die gespeicherte Wärme durch Kontakt und konduktive Wärmeleitung.

Bei der vorstehend geschilderten Bauform sind die Induktoren (3) nur im Bereich der Ruhestellung der Heizkörper (24) und damit in einem größeren Abstand zum Werkstück (2) angeordnet. Die Induktoren (3) sind hier ebenfalls mehrteilig ausgebildet und an die Heizkörperform durch Haltevorrichtungen (11) anpaßbar, wobei die Heizkörper (24) ihrerseits den Umformbereichen (18) nachgeformt sind. In einer Variante hierzu ist es möglich, zusätzliche Induktoren (3) in der in Figur 7 gezeigten Weise an den Umformbereichen (18) anzuordnen. In diesem Fall werden die Umformbereiche (18) von den Heizkörpern (24) konduktiv und von den benachbarten Induktoren (3) induktiv beheizt.

Bei den beschriebenen Bauformen können die Heizkörper (24) und die zusätzlichen Induktoren (3) bzw. deren Teile (4,5,6) in gleicher Weise längs der Umformbereiche (18) angeordnet und verteilt sein. In Abwandlung hierzu sind weitere Varianten möglich, in dem z.B. die Heizkörper (24) nur lokal an besonders kritischen Bereichen, z.B. an Ecken oder Wölbungen des Werkstücks (2) vorhanden sind und lokal für eine Erhöhung des Wärmeeintrags sorgen. Desgleichen kann die Anordnung auch umgekehrt sein, indem zusätzlich Induktoren (3) nur abschnittsweise und lokal angeordnet sind.

Abwandlungen der Erfindung sind in verschiedener Weise möglich. In der gezeigten Ausführungsform erstrecken sich die Induktorteile (4,5,6,7,8) weitgehend parallel zu den benachbarten Konturen der Werkstücke (2) bzw. Umformbereiche (18). Sie können alternativ aber auch schief oder schräg dazu angeordnet sein. Durch die damit einhergehende Abstandsänderung wird der Wärmeeintrag verändert. Außerdem können die Induktorteile (4,5,6,7,8) zumindest teilweise in ihrer räumlichen Lage gegenüber dem Werkstück (2) verändert werden. In der gezeigten Ausführungsform bildet der mehrteilige Induktor (3) eine längs des Außenumfangs des Werkstücks (2) mit seitlichem Abstand umlaufende Schleife. Durch die erwähnte räumliche Veränderung ist es z.B. möglich, einzelne oder alle Induktorteile über oder unter dem betreffenden Werkstückrand zu positionieren. In der bevorzugten Ausführung wird das Werkstück randseitig erwärmt. Alternativ oder zusätzlich können in entsprechender Weise auch innenliegende Werkstückbereiche erwärmt werden.

In weiterer Abwandlung ist es möglich, mehrere Induktoren (3) einzusetzen oder mit den Induktorteilen (4,5,6,7,8) mehrere Induktorschleifen oder -windungen zu bilden. Diese können gleichen oder unterschiedlichen Werkstückbereichen zugeordnet sein.

### BEZUGSZEICHENLISTE

- 1: Heizeinrichtung, Gelieranlage
- 2: Werkstück, Fahrzeugtür
- 3: Induktor
- 4: Induktorteil
- 5: Induktorteil
- 6: Induktorteil
- 7: Induktorteil
- 8: Induktorteil
- 9: Verbindungselement, flexibel
- 10: Verbindungselement, starr
- 11: Haltevorrichtung
- 12: Stromversorgung, Steuerung
- 13: Elektroanschluß
- 14: Fluidanschluß
- 15: Öffnung, Fensteröffnung
- 16: Induktorwindung
- 17: Induktorwindung
- 18: Umformbereich, Bördelbereich
- 19: Außenblech
- 20: Innenblech
- 21: Dichtmittel
- 22: Bauteilaufnahme
- 23: Temperaturfühler
- 24: Heizkörper, Heizrahmen
- 25: Zustellvorrichtung
- 26: Grundplatte, Gestell
- 27: Verstelleinrichtung

## Patentansprüche

1. Verfahren zur Wärmebehandlung von Werkstücken (2), insbesondere zum Gelieren oder zum Erwärmen von Bördelbereichen an Fahrzeugkarosserieteilen, mit mindestens einem Heizelement, dadurch **gekennzeichnet**, dass das Werkstück (2) mit ein oder mehreren Heizkörpern (24) konduktiv erwärmt wird.

2. Verfahren nach Anspruch 1, dadurch **gekennzeichnet**, dass die Heizkörper (24) der zu beheizenden Werkstückkontur nachgeformt werden.

3. Verfahren nach Anspruch 1 oder 2, dadurch **gekennzeichnet**, dass die Heizkörper (24) induktiv erwärmt werden.

4. Verfahren nach Anspruch 1, 2 oder 3, dadurch **gekennzeichnet**, dass die Heizkörper (24) mit einer Zustellvorrichtung (25) zur Wärmebehandlung an das Werkstück (2) zugestellt werden.

5. Verfahren nach einem der Ansprüche 1 bis 4, dadurch **gekennzeichne**t, dass die Heizkörper (24) in der vom Werkstück (2) distanzierten Ruhestellung beheizt werden.

6. Verfahren nach einem der Ansprüche 1 bis 5, dadurch **gekennzeichnet**, dass das Werkstück (2) zusätzlich mit ein oder mehreren Induktoren (3) induktiv erwärmt wird.

7. Heizeinrichtung zur Wärmebehandlung von Werkstücken (2), insbesondere zum Gelieren oder zum Erwärmen von Bördelbereichen an Fahrzeugkarosserieteilen, mit ein oder mehreren Heizelementen, dadurch **gekennzeichnet**, dass die Heizeinrichtung (1) ein oder mehrere Heizkörper (24) zur konduktiven Erwärmung des Werkstücks (2) aufweist.

8. Heizeinrichtung nach Anspruch 7, dadurch **gekennzeichnet**, dass die Heizkörper (24) der Werkstückkontur nachgeformt sind.

9. Heizeinrichtung nach Anspruch 7 oder 8, dadurch **gekennzeichnet**, dass die Heizkörper (24) zur örtlichen Veränderung des Wärmeeintrags am Werkstück (2) einzeln positionierbar sind.

10. Heizeinrichtung nach Anspruch 7, 8 oder 9, dadurch **gekennzeichnet**, dass die Heizkörper (24) eine kurze Länge haben und punktuell am Werkstück (2) angeordnet sind.

11. Heizeinrichtung nach einem der Ansprüche 7 bis 10, dadurch **gekennzeichnet**, dass die Heizkörper (24) eine Zustellvorrichtung (25) aufweisen.

12. Heizeinrichtung nach einem der Ansprüche 7 bis 11, dadurch **gekennzeichnet**, dass die Heizeinrichtung (1) ein oder mehrere Induktoren (3) zur Erwärmung der Heizkörper (24) aufweist.

13. Heizeinrichtung nach einem der Ansprüche 7 bis 12, dadurch **gekennzeichnet**, dass die Heizeinrichtung (1) ein oder mehrere Induktoren (3) zur zusätzlichen Erwärmung des Werkstücks (2) aufweist.

14. Heizeinrichtung nach einem der Ansprüche 7 bis 13, dadurch **gekennzeichnet**, dass die Induktoren (3) ein- oder mehrteilig ausgebildet sind und einzeln einstellbare Haltevorrichtungen (11) aufweisen.

15. Heizeinrichtung nach Anspruch 14, dadurch **gekennzeichnet**, dass die Haltevorrichtungen (11) in zwei oder mehr Achsen verstellbar sind.

16. Heizeinrichtung nach einem der Ansprüche 7 bis 15, dadurch **gekennzeichnet**, dass die Induktoren (3) und die Verbindungselemente (9,10) als stromleitende und verformbare Rohre ausgebildet sind.
